# EUROPÄISCHE PATENTSCHRIFT

(11) **EP 1 117 580 B1**
(45) Veröffentlichungstag und Bekanntmachung des Hinweises auf die Patenterteilung: **15.08.2018**
(21) Anmeldenummer: 99953687.3
(22) Anmeldetag: 02.09.1999
(51) Int. Cl.: B60T 8/00

(54) **VORRICHTUNG ZUR BEEINFLUSSUNG DES VORTRIEBES EINES FAHRZEUGES**
DEVICE FOR INFLUENCING THE PROPULSION OF A VEHICLE
DISPOSITIF PERMETTANT D'INFLUENCER LA PROPULSION D'UN VEHICULE

(30) Priorität: 30.09.1998 DE 19844912
(43) Veröffentlichungstag der Anmeldung: 25.07.2001
(73) Patentinhaber: ROBERT BOSCH GMBH, 70442 Stuttgart (DE)
(72) Erfinder: KOHLER, Rolf, D-71701 Schwieberdingen (DE); SCHMITT, Johannes, D-71706 Markgröningen (DE); BRAUN, Günter, D-74321 Bietigheim (DE); ZÖBELE, Andreas, D-71706 Markgröningen (DE); KOTTMANN, Matthias, D-73240 Wendlingen (DE)
(86) Internationale Anmeldenummer: PCT/DE1999/002774
(87) Internationale Veröffentlichungsnummer: WO 2000/018623

(56) Entgegenhaltungen:
- DE-A- 19 712 232
- US-A- 4 804 058
- US-A- 4 849 891
- US-A- 5 407 257

## Beschreibung

### Stand der Technik

Die Erfindung betrifft eine Vorrichtung zur Beeinflussung des Vortriebes eines Fahrzeuges. Solche Vorrichtung ist aus dem Stand der Technik in vielerlei Modifikationen bekannt.

Aus der DE 19 02 944 B2 ist eine Steuereinrichtung zum Vermeiden von Kurvenschleudern bei Kraftfahrzeugen bekannt. Das Kraftfahrzeug umfaßt eine blockiergeschützte Bremsanlage, den Fahrzustand erfassende Meßelemenete und über diese ansteuerbare Stellelemente. Die Meßelemente bestehen aus einem Kreiselgerät, Radsensoren, Lenkungssensoren und Potentiometern. Die Meßelemente sind mit einem auf Grenzwerte der Querbeschleunigung des Fahrzeuges ansprechenden, programmierten Steuergerät verbunden. Über das Steuergerät sind die Stellelemente für die Steuerung der Bremsanlage sowie ein Leistungsregelglied einer Brennkraftmaschine zur Spurhaltung auslösbar. Die Spurhaltungseinrichtung wird bereits unterhalb der maximal für die vorgesehene Fahrzeugkonzeption zulässigen Querbeschleunigung tätig, so daß das Fahrzeug nicht in einen instabilen Fahrzustand kommen kann. Eine Beücksichtigung einer Größe, die das zeitliche Verhalten der Querbeschleunigung beschreibt, ist nicht gezeigt. Dokument US A 849 891 offenbart eine Vorrichtung zur Beeinflussung des Vortriebes eines Fahrzeuges.

Die Aufgabe der vorliegenden Erfindung besteht darin, bestehende Vorrichtungen zur Beeinflussung des Vortriebs eines Fahrzeuges dahingehend zu verbessern, daß bei der Beeinflussung des Vortriebes auch das zeitliche bzw. dynamische Verhalten des Fahrzeuges berücksichtigt wird.

Diese Aufgabe wird durch die Merkmale Ansprüchs 1 gelöst.

### Vorteile der Erfindung

Bei der erfindungsgemäßen Vorrichtung handelt es sich um eine Vorrichtung zur Beeinflussung des Vortriebes eines Fahrzeuges gemäß dem Gegenstand des Anspruchs 1.

Vorteilhafterweise beschreibt die Eingriffsgröße den einzustellenden Drosselklappenwinkel oder die einzuspritzende Kraftstoffeinspritzmenge oder den einzustellenden Zündzeitpunkt. Handelt es sich beispielsweise um ein mit einem Ottomotor ausgerüstetes Fahrzeug, so kommt als Eingriffsgröße der Drosselklappenwinkel oder der Zündzeitpunkt (Zündwinkel) in Frage. Bei einem mit einem Dieselmotor ausgestatteten Fahrzeug kommt die Kraftstoffeinspritzmenge in Frage. Durch Zündungseingriffe ist eine schnelle Motormomentenreduzierung möglich.

Die erfindungsgemäße Vorrichtung ist auch für Fahrzeuge, die mit einem Elektromotor ausgestattet sind, einsetzbar. In diesem Fall ist als Eingriffsgröße der durch den Motor fließende elektrische Strom anzusehen.

Vorteilhafterweise können zur Beeinflussung des Vortriebes des Fahrzeuges ergänzend zu den Motoreingriffen auch Eingriffe in die Radbremsen und/oder in die Kupplung und/oder in das Getriebe durchgeführt werden. Durch entsprechende Eingriffe in die Radbremsen kann die Fahrzeuggeschwindigkeit reduziert werden. Durch Eingriffe in die Kupplung wird der Antriebsstrang kurzzeitig geöffnet. Wodurch die Antriebsräder frei von Längskräften die maximale Querkraft übertragen können. Als Eingriff in das Getriebe ist beispielsweise denkbar, daß zur Reduzierung des Antriebsmomentes ein Gang hochgeschaltet wird. Die Beeinflussung des Vortriebsmomentes kann eine Begrenzung, eine Reduzierung oder eine Erhöhung des Vortriebsmomentes bewirken.

Vorteilhafterweise wird daß die Eingriffsgröße so ermittelt wird, daß durch den Motoreingriff eine Stabilisierung des Fahrzeuges in Querrichtung erfolgt. Durch den Motoreingriff und weiteren vorstehend beschriebenen Eingriffe wird die Fahrzeugstabilität im Grenzbereich beeinflußt und somit der Fahrer in kritischen Fahrsituationen unterstützt. Die Lenkbarkeit des Fahrzeuges wird im Vortriebsfall erhöht, das Fahrzeug neigt weniger stark zum Untersteuern. Insbesondere soll mit dem Motoreingriff auch ein Umkippen des Fahrzeuges um eine in Längsrichtung des Fahrzeuges orientierte Fahrzeugachse, vermieden werden.

Zur Realisierung der erfindungsgemäßen Vorrichtung bietet sich ein Ausführungsbeispiel an.

In dem erfindungsgemäßen Ausführungsbeispiel wird als Größe, die das zeitliche Verhalten der Querbeschleunigungsgröße beschreibt, eine Periodendauergröße ermittelt, die den zeitlichen Abstand zweier Nulldurchgänge der Querbeschleunigungsgröße mit gleichem Vorzeichenwechsel, insbesondere einem Vorzeichenwechsel von positiven zu negativen Werten der Querbeschleunigungsgröße hin, beschreibt.

Es hat sich als vorteilhaft erwiesen, das auf eine Instabilität hinweisende Verhalten des Fahrzeuges bzw. das vorbekannte Verhalten des Fahrzeuges in Abhängigkeit der Amplitude der Querbeschleunigungsgröße und in Abhängigkeit der Periodendauer der Querbeschleunigungsgröße zu ermitteln. Diese Vorgehensweise eignet sich in besonderem Maße zur Erkennung von Schwingungen in der Querbeschleunigungsgröße, die auf ein instabiles Verhalten zurückschließen lassen.

Aus vorstehenden Gründen weisen die dritten Mittel vorteilhafterweise erste Mittel auf, mit denen eine Amplitudengröße ermittelt wird, die den Abstand zwischen einem Minimalwert und einem Maximalwert der Querbeschleunigungsgröße innerhalb einer Periode der Querbeschleunigungsgröße beschreibt. Weist die Querbeschleunigungsgröße beispielsweise eine Schwingung auf, so entspricht der Minimalwert der Amplitude einer negativen Halbwelle und der Maximalwert der Amplitude einer positiven Halbwelle. Die Berücksichtigung der Maximalwerte und Minimalwerte bietet sich deshalb an, da sich ein instabiler Fahrzeugzustand insbesondere in großen Schwankungen der Querbeschleunigungsgröße äußert. In Abhängigkeit dieser Amplitudengröße wird die Eingriffsgröße ermittelt.

Ferner weisen die dritten Mittel zweite Mittel auf, mit denen in Abhängigkeit der Größe, die das zeitliche Verhalten der Querbeschleunigungsgröße beschreibt und/oder der Amplitudengröße eine Gewichtungsgröße für die Eingriffsgröße ermittelt wird. In Abhängigkeit dieser Gewichtungsgröße und einem wenigstens vom Fahrerwunsch abhängigen Vorwert für die Eingriffsgröße wird in dritten Mitteln, die in den vorstehend beschriebenen dritten Mitteln enthalten sind, die Eingriffsgröße ermittelt.

Vorteilhafterweise handelt es sich bei der Gewichtungsgröße um eine Zählergröße, die, insbesondere um 1, inkrementiert wird, wenn die Amplitudengröße größer als ein Schwellenwert ist, und wenn die Periodendauergröße innerhalb eines vorgebbaren Wertebereiches liegt. Die Zählergröße ist vorteilhafterweise auf einen Maximalwert beschränkt. Ferner wird die Zählergröße auf einen vorgegebenen Wert, insbesondere Null, zurückgesetzt, wenn die Amplitudengröße kleiner als der Schwellenwert ist oder wenn die Zählergröße außerhalb des vorgebbaren Wertebereiches liegt.

Desweiteren hat sich als vorteilhaft erwiesen, daß der Schwellenwert für die Amplitudengröße und/oder der Wertebereich für die Periodendauergröße als Funktion einer Geschwindigkeitsgröße, die die Fahrzeuggeschwindigkeit beschreibt, vorgegeben wird. Dies ist vor dem Hintergrund sinnvoll, da sich das Fahrzeugverhalten, was Instabiliäten angeht, in starkem Maße abhängig von der Fahrzeuggeschwindigkeit verändert. Somit ist eine adaptive Auswertung sichergestellt.

Der Nulldurchgang der Querbeschleunigungsgröße wird vorteilhafterweise in Abhängigkeit der zeitlichen Änderung der Querbeschleunigungsgröße ermittelt.

Die vorteilhafte Ausgestaltung, wie sie dem Ausführungsbeispiel zugrunde liegt, kann nochmals wie folgt zusammengefaßt werden: Die Vorrichtung zur Beeinflussung des Vortriebes des Fahrzeuges enthält erste Mittel, mit denen eine Querbeschleunigungsgröße erfaßt wird, die die auf das Fahrzeug wirkende Querbeschleunigung beschreibt. Ferner enthält die Vorrichtung zweite Mittel, mit denen eine Anzeigegröße ermittelt wird, die anzeigt, ob die Querbeschleunigungsgröße ein auf eine Instabilität hinweisendes Verhalten oder ein vorbekanntes Verhalten des Fahrzeuges, insbesondere eine Schwingung, aufweist. Ferner enthält die Vorrichtung dritte Mittel, mit denen zur Beeinflussung des Vortriebes zumindest Motoreingriffe durchgeführt werden, wobei die Motoreingriffe zumindest in Abhängigkeit der Anzeigegröße vorgenommen werden.

Weitere Vorteile sowie vorteilhafte Ausgestaltungen können den Unteransprüchen, der Zeichnung sowie der Beschreibung des Ausführungsbeispiels entnommen werden.

### Zeichnung

Die Zeichnung besteht aus den Figuren 1 bis 7. Figur 1 zeigt in einer Übersichtsanordnung die erfindungsgemäße Vorrichtung zur Durchführung des erfindungsgemäßen Verfahrens. Die Figuren 2 und 3 beziehen sich auf ein Ausführungsbeispiel. Die Figuren 4 und 5 beziehen sich in entsprechen-der Weise auf ein erfindungsgemäßes Ausführungsbeispiel. Die Figuren 6 und 7 stellen verschiedene Signalverläufe bzw. Verläufe von Größen dar.

### Ausführungsbeispiele

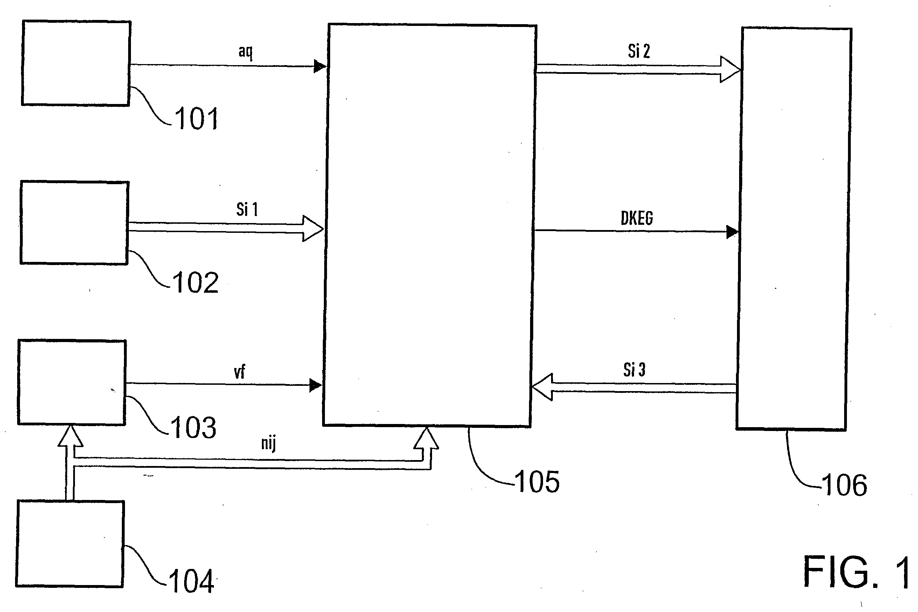

Zunächst soll auf Figur 1 eingegangen werden. Die in Figur 1 dargestellte Anordnung liegt den beiden Ausführungsbeispielen zugrunde.

Block 101 stellt einen Querbeschleunigungssensor dar, mit dem eine Querbeschleunigungsgröße aq, die eine auf das Fahrzeug wirkende Querbeschleunigung beschreibt, erfaßt wird.

Die Querbeschleunigungsgröße aq wird einem Block 105 zugeführt.

Block 102 stellt eine Anordnung verschiedener Mittel dar, mit dem verschiedene Größen bzw. Signale, die mit Si1 bezeichnet sind, ermittelt werden. Zum einen handelt es sich hierbei um eine Fahrerwunschgröße DKF, die den Fahrerwunsch bzgl. des Vortriebes beschreibt. Zum anderen handelt es sich um eine Höhengröße, eine Steigungsgröße oder um Größen, in deren Abhängigkeit eine Eingriffsgröße, in deren Abhängigkeit Motoreingriffe vorgenommen werden, dahingehend korrigiert werden, daß in allen Motorbetriebspunkten ein äquivalentes Motormoment vorliegt. Diese Größen bzw. Signale Si1 werden dem Block 105 zugeführt.

Block 104 stellt Raddrehzahlfühler dar, mit denen Raddrehzahlgrößen nij ermittelt werden. Diese Raddrehzahlgrößen nij werden zum einen einem Block 103 und zum anderen dem Block 105 zugeführt.

Zur Schreibweise der Raddrehzahlgrößen nij sei an dieser Stelle erklärt: Der Index i zeigt an, ob es sich um ein Rad der Vorderachse (v) oder um ein Rad der Hinterachse (h) handelt. Der Index j zeigt an, ob es sich um ein rechtes (r) oder linkes (1) Rad handelt.

Im Block 103 wird in an sich bekannter Weise eine Geschwindigkeitsgröße vf, die die Fahrzeuggeschwindigkeit beschreibt, ermittelt. Die Geschwindigkeitsgröße vf wird dem Block 105 zugeführt.

Bei dem Block 105 handelt es sich um einen Regler. In diesem Regler läuft eine Steuerung bzw. Regelung ab, mit der die Querdynamik des Fahrzeuges beeinflußt wird. Zur Erfassung der Fahrzeugsituation werden dem Regler 105 die Querbeschleunigungsgröße aq, die Raddrehzahlgrößen nij, die Geschwindigkeitsgröße vf, die Größen bzw. Signale Si1 sowie ausgehend vom Block 106 Größen bzw. Signale Si3 zugeführt.

Zur Beeinflussung der Querdynamik des Fahrzeuges gibt der Regler 105 Signale bzw. Größen Si2 sowie eine weitere Größe DKEG aus. Sowohl die Signale bzw. Größen Si2 als auch die Größe DKEG werden einem Block 106 zugeführt, der die im Fahrzeug enthaltene Aktuatorik darstellt.

Bei der Aktuatorik handelt es sich zum einen um solche mit der der Motor bzw. das von ihm abgegebene Motormoment beeinflußt wird. Verfügt das Fahrzeug über einen Ottomotor, so handelt es sich um Aktuatoren zur Beeinflussung der Drosselklappenstellung bzw. des Drosselklappenwinkels oder um Aktuatoren zur Beeinflussung des Zündzeitpunktes (Zündwinkels). Verfügt das Fahrzeug über einen Dieselmotor so handelt es sich um Aktuatoren zur Beeinflussung der zugeführten Kraftstoffmenge. Verfügt das Fahrzeug über einen Elektromotor als Antriebsmotor, so handelt es sich um Aktuatoren zur Beeinflussung des durch den Motor fließenden Stroms.

In den vorliegenden Ausführungsbeispielen soll das Fahrzeug zum einen über einen Ottomotor verfügen und zum anderen soll als Eingriffsgröße DKEG, in deren Abhängigkeit Motoreingriffe zur Beeinflussung des Motormoments durchgeführt werden, den Drosselklappenwinkel beschreiben. An dieser Stelle sei erwähnt, daß im Falle eines Dieselmotors die Eingriffsgröße DKEG die zugeführte Kraftstoffmenge und im Falle eines Elektromotors den durch den Motor fließenden Strom beschreiben würde.

Zum anderen handelt es sich bei der Aktuatorik um solche, mit der Eingriffe in die Kupplung, mit denen die Kraftübertragung zwischen Motor und Antriebsräder beeinflußt wird, bzw. Eingriffe in das Getriebe möglich sind. Als Eingriff in das Getriebe ist beispielsweise denkbar, daß zur Reduzierung des Antriebsmomentes ein Gang hochgeschaltet wird. Ferner sind auch Eingriffe in die Bremsen des Fahrzeuges denkbar. Die Beeinflussung des Antriebsmomentes kann eine Begrenzung, eine Reduzierung oder eine Erhöhung des Antriebsmomentes bewirken. Durch die vorstehend beschriebenen Eingriffe wird die Fahrzeugstabilität im Grenzbereich beeinflußt und somit der Fahrer in kritischen Fahrsituationen unterstützt. Die Lenkbarkeit des Fahrzeuges wird im Vortriebsfall erhöht, das Fahrzeug neigt weniger stark zum Untersteuern.

Dem Regler 105 werden, ausgehend von der Aktuatorik 106, Größen bzw. Signale Si3 zugeführt, die den Zustand der jeweiligen Aktuatoren anzeigen und die bei der Regelung bzw. Steuerung berücksichtigt werden.

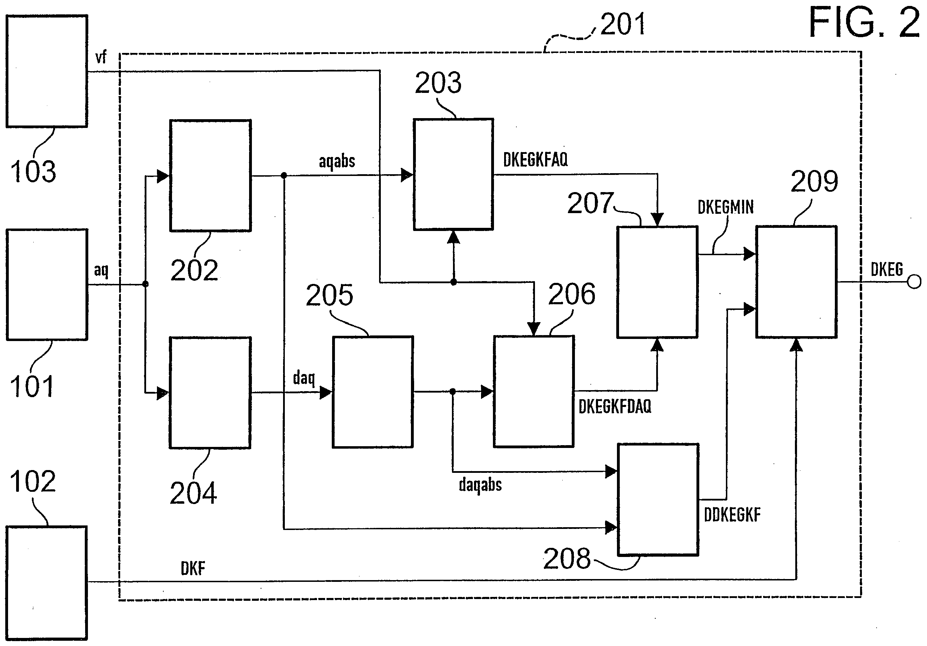

Nachfolgend wir auf Figur 2 eingegangen, die die erfindungswesentlichen Komponenten 201 eines ersten Ausführungsbeispiels zeigt. Bei diesem ersten Ausführungsbeispiel handelt es sich um ein Beispiel, welches das Verständnis der Erfindung erleichtern soll. Mit Hilfe dieser erfindungswesentlichen Komponenten 201 wird eine Eingriffsgröße DKEG ermittelt, in deren Abhängigkeit Motoreingriffe zur Beeinflussung des Vortriebs durchgeführt werden. Im vorliegenden Ausführungsbeispiel soll es sich bei dem durchzuführenden Motoreingriff um einen Drosselklappeneingriff handeln. Deshalb beschreibt die Eingriffsgröße DKEG den durchzuführenden Drosselklappeneingriff.

Die mit dem Querbeschleunigungssensor 101 erfaßte Querbeschleunigungsgröße aq sowohl einem Block 202 als auch einem Block 204 zugeführt. Bei dem Block 202 handelt es sich um erste Betragsbildungsmittel, mit denen der Betrag aqabs der Querbeschleunigungsgröße aq gebildet wird. Der Betrag aqabs wird sowohl ersten Ermittlungsmitteln 203 als dritten Ermittlungsmitteln 208 zugeführt.

Bei dem Block 204 handelt es sich um Mittel, mit denen eine Größe daq ermittelt wird, die das zeitliche Verhalten der Querbeschleunigungsgröße aq beschreibt. Im vorliegenden Ausführungsbeispiel stellt die Größe daq eine Änderungsgröße dar, die die zeitliche Änderung der Querbeschleunigungsgröße beschreibt. Im konkreten Fall handelt es sich hierbei um den Gradienten oder die zeitliche Ableitung der Querbeschleunigungsgröße aq, die in bekannter Weise ermittelt werden. Die Größe daq, die das zeitliche Verhalten der Querbeschleunigungsgröße aq beschreibt, wird einem Block 205 zugeführt.

Bei dem Block 205 handelt es sich um zweite Betragsbildungsmittel, mit denen der Betrag daqabs der Größe daq gebildet wird. Dieser Betrag daqabs wird sowohl zweiten Ermittlungsmitteln 206 als auch den dritten Ermittlungsmitteln 208 zugeführt.

In den Ermittlungsmitteln 203, 206 und 208 werden in Abhängigkeit der ihnen zugeführten Eingangsgrößen die von ihnen ausgegebenen Größen unter Verwendung von Kennfeldern ermittelt.

Den ersten Ermittlungsmitteln 203 wird neben dem Betrag aqabs der Querbeschleunigungsgröße noch die Geschwindigkeitsgröße vf zugeführt. In Abhängigkeit des Betrags aqabs und der Geschwindigkeitsgröße vf wird mit den ersten Ermittlungsmitteln 203 ein erster Wert DKEGKFAQ für die Eingriffsgröße ermittelt. Verallgemeinert: Der erste Wert der Eingriffsgröße wird in Abhängigkeit der Querbeschleunigungsgröße aq und der Geschwindigkeitsgröße vf ermittelt. Dabei hängt der erste Wert der Eingriffsgröße dergestalt von der Querbeschleunigungsgröße ab, daß mit zunehmendem Wert der Querbeschleunigungsgröße dieser zweite Wert abnimmt. Außerdem hängt der erste Wert der Eingriffsgröße dergestalt von der Geschwindigkeitsgröße ab, daß mit zunehmendem Wert der Geschwindigkeitsgröße dieser erste Wert ebenfalls abnimmt. Der erste Wert DKEGKFAQ für die Eingriffsgröße wird einem Block 207 zugeführt.

Den zweiten Ermittlungsmitteln 206 wird neben dem Betrag daqabs der Größe, die das zeitliche Verhalten der Querbeschleunigungsgröße beschreibt, noch die Geschwindigkeitsgröße vf zugeführt. In Abhängigkeit des Betrags daqabs und der Geschwindigkeitsgröße vf wird mit den zweiten Ermittlungsmitteln 206 ein zweiter Wert DKEGKFDAQ für die Eingriffsgröße ermittelt. Verallgemeinert: Der zweite Wert der Eingriffsgröße wird in Abhängigkeit der Größe daq, die das zeitliche Verhalten der Querbeschleunigungsgröße beschreibt und der Geschwindigkeitsgröße vf ermittelt. Dabei hängt der zweite Wert der Eingriffsgröße dergestalt von der Größe, die das zeitliche Verhalten der Querbeschleunigungsgröße beschreibt, ab, daß mit zunehmendem Wert der Größe, die das zeitliche Verhalten der Querbeschleunigungsgröße beschreibt, dieser zweite Wert abnimmt. Außerdem hängt der zweite Wert der Eingriffsgröße dergestalt von der Geschwindigkeitsgröße ab, daß mit zunehmendem Wert der Geschwindigkeitsgröße dieser zweite Wert abnimmt. Der zweite Wert DKEGKFDAQ wird einem Block 207 zugeführt.

Die beiden Werte DKEGKFAQ und DKEGKFDAQ für die Eingriffsgröße werden in Abhängigkeit der Querbeschleunigungsgröße bzw. der Größe, die das zeitliche Verhalten der Querbeschleunigungsgröße beschreibt, und der Geschwindigkeitsgröße vf so ermittelt, daß in den durch diese Größen beschriebenen Fahrzeugzuständen durch die auf die Eingriffsgröße zurückgehende Beeinflussung des Vortriebes eine Instabilität des Fahrzeuges abgebaut wird oder daß eine drohende Instabilität nicht zustande kommt.

Bei dem Block 207 handelt es sich um Auswahlmittel, mit denen eine Auswahlgröße DKEGMIN ermittelt wird. Als Auswahlgröße wird der kleinere der beiden Werte DKEGKFAQ bzw. DKEGKFDAQ für die Eingriffsgröße ausgewählt. Die Auswahlgröße DKEGMIN wird einem Block 209 zugeführt.

In den dritten Ermittlungsmitteln 208 wird in Abhängigkeit des Betrags aqabs der Querbeschleunigungsgröße und des Betrags daqabs der Größe, die das zeitliche Verhalten der Querbeschleunigungsgröße beschreibt, ein Zuwachswert DDKEGKF für die Eingriffsgröße ermittelt. Verallgemeinert: Der Zuwachswert wird in Abhängigkeit der Querbeschleunigungsgröße und der Größe, die das zeitliche Verhalten der Querbeschleunigungsgröße beschreibt ermittelt. Dabei hängt der Zuwachswert der Eingriffsgröße dergestalt von der Querbeschleunigungsgröße ab, daß mit zunehmendem Wert der Querbeschleunigungsgröße dieser Zuwachswert abnimmt. Außerdem hängt der Zuwachswert der Eingriffsgröße dergestalt von der Größe, die das zeitliche Verhalten der Querbeschleunigungsgröße beschreibt, ab, daß mit zunehmendem Wert der Größe, die das zeitliche Verhalten der Querbeschleunigungsgröße beschreibt, dieser Zuwachswert abnimmt. Insbesondere nimmt der Zuwachswert zum einen oberhalb eines vorgebbaren Wertes der Querbeschleunigungsgröße und zum anderen oberhalb eines vorgebbaren Wertes der Größe, die das zeitliche Verhalten der Querbeschleunigungsgröße beschreibt, einen sehr kleinen Wert, insbesondere den Wert Null, an. Der Zuwachswert DDKEGKF wird dem Block 209 zugeführt.

Bei dem Block 209 handelt es sich vierte Ermittlungsmittel, mit denen die Eingriffsgröße DKEG in Abhängigkeit der Auswahlgröße DKEGMIN, des Zuwachswertes DDKEGKF und einer Fahrerwunschgröße DKF ermittelt wird. Die Fahrerwunschgröße DKF beschreibt den Fahrerwunsch bzgl. des Vortriebes des Fahrzeuges. Zur Ermittlung der Fahrerwunschgröße sind Mittel 102 vorgesehen. Bei diesen Mitteln 102 handelt es sich beispielsweise um ein dem Fahrpedal zugeordnetes Sensormittel, mit dem die Stellung des Fahrpedals erfaßt wird. Ausgehend von den Mitteln 102 wird die Fahrerwunschgröße DKF dem Block 209 zugeführt.

Durch die Verwendung von Kennfeldern in den Ermittlungsmitteln 203, 306 und 208 wird erreicht, daß die Eingriffsgröße kontinuierlich in Abhängigkeit der Querbeschleunigungsgröße und der Größe, die das zeitliche Verhalten der Querbeschleunigungsgröße beschreibt, ermittelt wird.

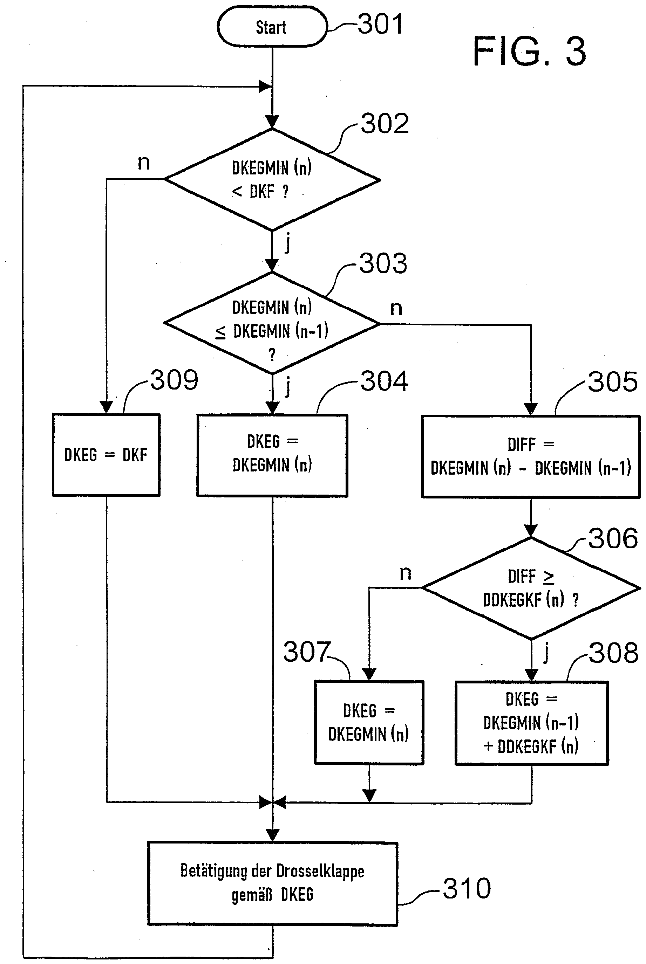

Auf die konkrete Vorgehensweise bei der Ermittlung der Eingriffsgröße DKEG wird im Zusammenhang mit Figur 3 eingegangen. Vorab sei jedoch so viel erwähnt, daß die Fahrerwunschgröße DKF quasi als Maximalwert für die Eingriffsgröße verwendet wird. D.h. solange der Wert der Fahrerwunschgröße DKF kleiner als der Wert die Auswahlgröße DKEGMIN ist, werden die Motoreingriffe in Abhängigkeit der Fahrerwunschgröße DKF vorgenommen.

Im folgenden wird auf Figur 3 eingegangen, in der die Schrittfolge, die dem ersten Ausführungsbeispiel zugrunde liegt, dargestellt ist.

Das Verfahren beginnt mit einem Schritt 301, an den sich ein Schritt 302 anschließt. An dieser Stelle sei erwähnt, daß die Auswahlgröße DKEGMIN für aufeinanderfolgende Zeitschritte ermittelt wird. Somit liegt die Auswahlgröße zeitdiskret und wertediskret vor. In Figur 3 ist der aktuelle Zeitschritt mit (n) und der vorhergehende Zeitschritt mit (n-1) gekennzeichnet.

Im Schritt 302 wird überprüft ob der Wert DKEGMIN(n) der Auswahlgröße des aktuellen Zeitschrittes n (auf die verbale Kennzeichnung des Zeitschrittes wird nachfolgend verzichtet) kleiner als die Fahrerwunschgröße DKF ist. Wird im Schritt 302 festgestellt, daß die Fahrerwunschgröße DKF kleiner als der Wert DKEGMIN(n) der Auswahlgröße ist, so wird anschließend an den Schritt 302 ein Schritt 309 ausgeführt, in welchem der Eingriffsgröße DKEG der Wert der Fahrerwunschgröße DKF zugewiesen wird. Diese Zuweisung bedeutet, daß, wie oben bereits erwähnt, der Fahrerwunsch als Maximalwert für die Eingriffsgröße verwendet wird. Dies ist möglich, da in diesem Fall davon auszugehen ist, daß bei einer Beeinflussung des Vortriebes in Abhängigkeit des Fahrerwunsches keine Fahrzeuginstabilität auftreten wird. Anschließend an den Schritt 309 wird ein Schritt 310 ausgeführt.

Wird dagegen im Schritt 302 festgestellt, daß die Fahrerwunschgröße DKF größer als der Wert DKEGMIN(n) der Auswahlgröße ist, so wird anschließend an den Schritt 302 ein Schritt 303 ausgeführt. Im Schritt 303 wird überprüft, ob der Wert DKEGMIN(n) der Auswahlgröße kleiner als der oder gleich dem Wert DKEGMIN(n-1) der Auswahlgröße ist. Ist dies der Fall, so wird anschließend an den Schritt 303 ein Schritt 304 ausgeführt, in welchem der Eingriffsgröße DKEG der Wert DKEGMIN(n) zugewiesen wird. Anschließend an den Schritt 304 wird der Schritt 310 ausgeführt.

Wird dagegen im Schritt 303 festgestellt, daß der Wert DKEGMIN(n) der Auswahlgröße größer als der Wert DKEGMIN(n-1) der Auswahlgröße ist, so wird anschließend an den Schritt 303 ein Schritt 305 ausgeführt. In diesem Schritt wird die DIFF Differenz zwischen dem Wert DKEGMIN(n) und dem Wert DKEGMIN(n-1) gebildet. Anschließend an den Schritt 305 wird ein Schritt 306 ausgeführt.

Im Schritt 306 wird übeprüft, ob die Größe DIFF größer als der oder gleich dem Zuwachswert DDKEGKF(n) ist. Ist dies der Fall, so wird anschließend an den Schritt 306 ein Schritt 308 ausgeführt. In diesem Schritt wird der Eingriffsgröße DKEG die Summe aus DKEGMIN(n-1) und DDKEGKF(n) zugewiesen. Anschießend an den Schritt 308 wird der Schritt 310 ausgeführt.

Wird dagegen im Schritt 306 festgestellt, daß die Differenz DIFF kleiner als der Zuwachswert DDKEGKF(n) ist, so wird anschließend an den Schritt 306 ein Schritt 307 ausgeführt. In diesem Schritt wird der Eingriffsgröße DKEG der Wert DKEGMIN(n) zugewiesen. Anschließend an den Schritt 307 wird der Schritt 310 ausgeführt.

Durch die in den Schritten 305, 306, 307 und 308 ablaufenden Vorgänge ist folgendes realisiert: Wird aufgrund der Fahrzeugsituation ein Wert DKEGMIN(n) für die Auswahlgröße ermittelt, der verglichen mit dem Wert DKEGMIN(n-1) des vorhergehenden Zeitschrittes größer ist, so wird der sich daraus ergebende Anstieg der Eingriffsgröße begrenzt. Die Anstiegsbegrenzung wird im Schritt 308 ausgehend von dem Zuwachswert DDKEGKF(n) realisiert. D.h. der zeitliche Anstieg der Eingriffsgröße wird durch den Zuwachswert DDKEGKF begrenzt.

Insgesamt wird durch das in Figur 3 dargestellte Verfahren eine Begrenzung der Eingriffsgröße für den Fall realisiert, bei dem aufgrund des Fahrerwunsches ein größerer Vortreib einzustellen wäre, als der aufgrund der Fahrzeugsituation mit Blick auf ein stabiles Fahrzeugverhalten möglich ist. D.h. die Eingriffsgröße wird in Abhängigkeit der Querbeschleunigungsgröße und der Größe, die den zeitlichen Verlauf der Querbeschleunigungsgröße beschreibt, auf solche Werte begrenzt ist, bei denen das Fahrzeugverhalten stabil ist.

Im Schritt 310 wird die Drosselklappe gemäß der Eingriffsgröße DKEG betätigt. Anschließend an den Schritt 310 wird erneut der Schritt 302 ausgeführt.

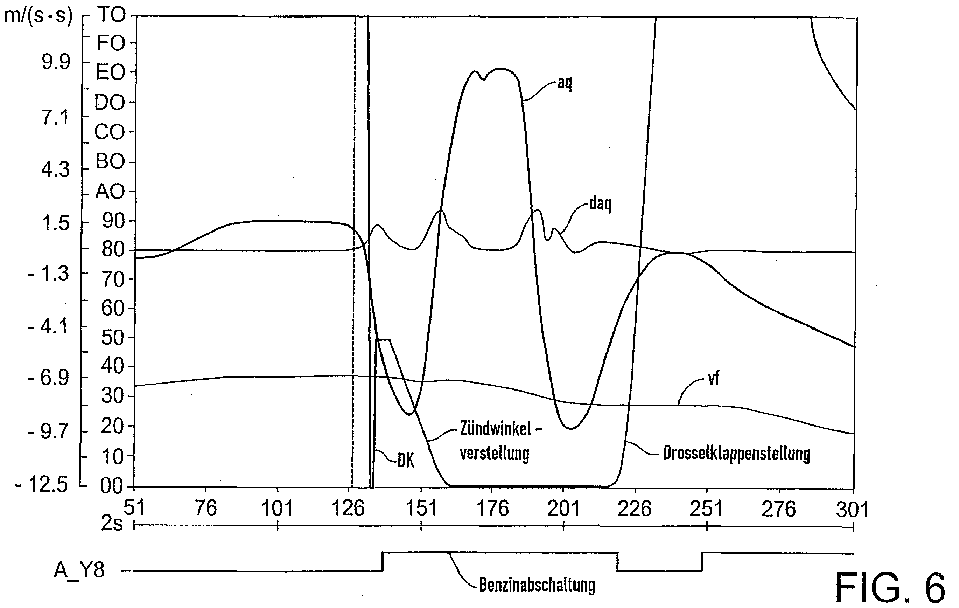

An dieser Stelle sei auf Figur 6 hingewiesen. Figur 6 zeigt einen exemplarischen Verlauf der Querbeschleunigungsgröße aq und der Größe daq. Figur 6 sind verschiedene Eingriffe bzw. die Auswirkungen verschiedener Eingriffe zu entnehmen.

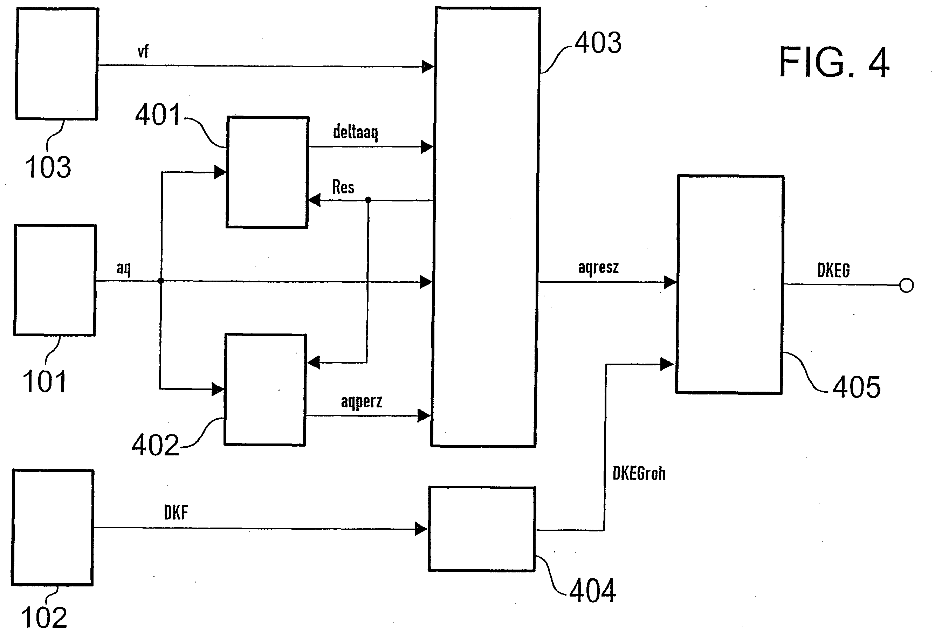

Nachfolgend wird auf Figur 4 eingegangen, die die dem erfindungsgemäßen Ausführungsbeispiel zugrunde liegende Anordnung zeigt.

Bei diesem Ausführungsbeispiel wird im Block 402 als Größe, die das zeitliche Verhalten der Querbeschleunigungsgröße beschreibt, eine Periodendauergröße aqperz ermittelt, die den zeitlichen Abstand zweier Nulldurchgänge der Querbeschleunigungsgröße mit gleichem Vorzeichenwechsel beschreibt. Beispielsweise können hierzu Vorzeichenwechsel von positiven zu negativen Werten der Querbeschleunigungsgröße betrachtet werden. Aber auch die Betrachtung des anderen Vorzeichenwechsels ist denkbar. Zur Ermittlung der Periodendauergröße aqperz wird dem Block 402 die Querbeschleunigungsgröße aq zugeführt. Die Periodendauergröße aqperz wird einem Block 403 zugeführt.

Beim Block 401 handelt es sich um Mittel, mit denen eine Amplitudengröße deltaaq ermittelt wird, die den Abstand zwischen einem Minimalwert und einem Maximalwert der Querbeschleunigungsgröße innerhalb einer Periode der Querbeschleunigungsgröße beschreibt. Hierzu wird dem Block 401 die Querbeschleunigungsgröße aq zugeführt. Die Amplitudengröße deltaaq wird einem Block 403 zugeführt. Weist die Querbeschleunigungsgröße beispielsweise aufgrund des Fahrzeugverhaltens eine Schwingung auf, so handelt es sich bei dem Maximalwert um die Amplitude der positiven Halbwelle und bei dem Minimalwert um die Amplitude der negativen Halbwelle.

Block 403 stellt Mittel dar, mit denen in Abhängigkeit der Periodendauergröße aqperz und der Amplitudengröße deltaaq eine Gewichtungsgröße aqresz für die Eingriffsgröße ermittelt wird. Zur Ermittlung der Gewichtungsgröße aqresz wird dem Block 403 ferner die Geschwindigkeitsgröße vf und die Querbeschleunigungsgröße aq zugeführt. Die im Block 403 ermittelte Gewichtungsgröße aqresz wird einem Block 405 zugeführt.

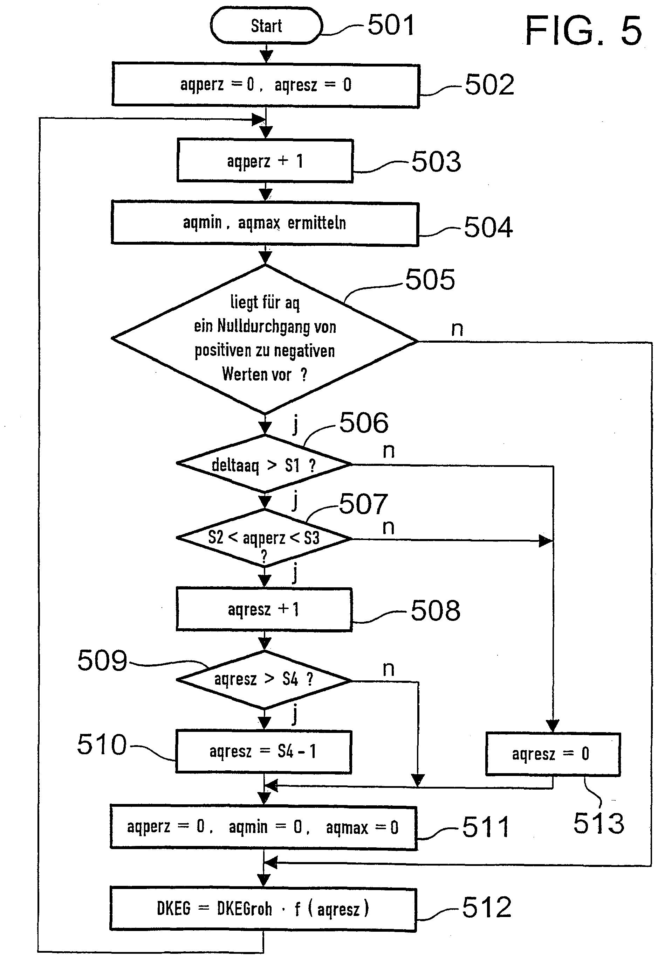

Auf die Ermittlung der Gewichtungsgröße aqresz wird im Zusammenhang mit Figur 5 ausführlich eingegangen. An dieser Stelle sei lediglich auf die Größe Res hingewiesen, die den Blöcken 401 und 402 ausgehend vom Block 403 zugeführt wird, und mit der diese beiden Blöcke initialisiert werden können.

Bei dem Block 405 handelt es sich um Mittel, mit denen in Abhängigkeit der Gewichtungsgröße aqresz und einem wenigstens vom Fahrerwunsch abhängigen Vorwert für die Eingriffsgröße DKEGroh die Eingriffsgröße DKEG ermittelt wird.

Als Vorwert DKEGroh für die Eingriffsgröße kommt entweder der Fahrerwunsch, d.h. die Fahrerwunschgröße DKF, selbst in Frage. In diesem Fall hätte der in Figur 4 dargestellte Block 404 keine Bedeutung, die Fahrerwunschgröße DKF würde direkt dem Block 405 zugeführt werden. Oder es kommt als Vorwert DKEGroh der mit Hilfe der Mittel 201 ermittelte Wert für die Eingriffsgröße in Frage. In diesem Fall würde der Block 404 dem Block 201 entsprechen.

Nachfolgend wird Figur 5 beschrieben, die die konkrete dem zweiten Ausführungsbeispiel zugrunde liegende Schrittfolge zeigt.

Das erfindungsgemäße Verfahren dieses Ausführungsbeispiels beginnt mit einem Schritt 501 an den sich ein Schritt 502 anschließt. In diesem Schritt werden sowohl die Gewichtungsgröße aqresz als auch die Periodendauergröße aqperz intialisiert. Hierzu wird beiden Größen der Wert Null zugewiesen. Zu diesem Zweck wird, wie in Figur 4 angedeutet, den Blöcken 401 und 402 ausgehend vom Block 403 die Größe Res zugeführt.

Anschließend an den Schritt 502 wird ein Schritt 503 ausgeführt, in dem die Periodendauergröße aqperz um 1 erhöht wird. In Verbindung mit dem noch zu beschreibenden Schritt 505 wird durch mehrmaliges Ausführen des Schrittes 503 der zeitliche Abstand zweier Nulldurchgänge der Querbeschleunigungsgröße mit gleichem Vorzeichenwechsel, d.h. im Falle einer Schwingung die Periodendauer, ermittelt.

An den Schritt 503 schließt sich ein Schritt 504 an. In diesem Schritt werden ein Maximalwert aqmax und ein Minimalwert aqmin der Querbeschleunigungsgröße ermittelt. Anschließend wird der Schritt 505 ausgeführt. In diesem Schritt wird überprüft, ob für die Querbeschleunigungsgröße aq ein Nulldurchgang von positiven zu negativen Werten vorliegt. Ist dies der Fall, so wird anschließend ein Schritt 506 ausgeführt. Liegt dagegen kein entsprechender Nulldurchgang vor, so wird anschließend an den Schritt 505 ein Schritt 512 ausgeführt.

Der Nulldurchgang der Querbeschleunigungsgröße wird beispielsweise in Abhängigkeit der zeitlichen Änderung der Querbeschleunigungsgröße ermittelt.

Im Schritt 506 wird überprüft, ob die Amplitudengröße deltaaq größer als ein Schwellenwert S1 ist. Die Amplitudengröße deltaaq wird im Block 402 ermittelt, und entspricht beispielsweise dem Betrag der Differenz, die aus dem Maximalwert aqmax und dem Minimalwert aqmin gebildet wird. Ist die Amplitudengröße deltaaq größer als der Schwellenwert S1, was darauf hinweist, daß das Fahrzeug beispielsweise ein Manöver fährt, bei welchem es in Querrichtung schwingt bzw. instabil ist, so wird anschließend an den Schritt 506 ein Schritt 507 ausgeführt. Ist die Amplitudengröße deltaaq kleiner als der Schwellenwert S1, so wird anschließend ein Schritt 513 ausgeführt, da in diesem Fall keine bzgl. des Fahrverhaltens des Fahrzeuges kritische Situation vorliegt.

Im Schritt 507 wird überprüft, ob die Periodendauergröße aqperz größer als ein Schwellenwert S2 und kleiner als ein Schwellenwert S3 ist, d.h. ob die Periodendauergröße aqperz innerhalb dieses Wertebereiches liegt. Ist dies der Fall, so wird anschließend an den Schritt 507 ein Schritt 508 ausgeführt. Ist dies nicht der Fall, so wird anschließend der Schritt 513 ausgeführt. In diesem Schritt 513 wird die Gewichtungsgröße aqresz zurückgesetzt, d.h. ihr wird der Wert Null zugewiesen, da mit den in den Schritten 506 bzw. 507 stattfindenden Abfragen festgestellt wurde, daß kein kritischer Fahrzeugzustand vorliegt. Anschließend an den Schritt 513 wird ein Schritt 511 ausgeführt.

Im Schritt 508 wird eine Gewichtungsgröße aqresz um 1 erhöht, da sowohl die im Schritt 506 abgefragte Amplitudenbedingung als auch die im Schritt 507 abgefragte Periodendauerbedingung erfüllt ist, was darauf hindeutet, daß eine kritische Fahrsitution vorliegt. Anschließend an den Schritt 508 wird ein Schritt 509 ausgeführt. In diesem Schritt wird überprüft, ob die Gewichtungsgröße größer als ein Schwellenwert S4 ist. Ist dies der Fall, so wird anschließend ein Schritt 510 ausgeführt, in welchem die Gewichtungsgröße auf einen Wert S4-1 begrenzt wird. Anschließend an den Schritt 510 wird der Schritt 511 ausgeführt. Wird dagegen im Schritt 509 festgestellt, daß die Gewichtungsgröße kleiner als der Schwellenwert S4 ist, weswegen eine Begrenzung nicht erforderlich ist, so wird anschließend an den Schritt 509 direkt der Schritt 511 ausgeführt.

Im Schritt 511 werden die Periodendauergröße aqperz, der Minimalwert aqmin und der Maximalwert aqmax zurückgesetzt, d.h. ihnen wird der Wert Null zugewiesen. Anschließend an den Schritt 511 wird der Schritt 512 ausgeführt. In diesem Schritt wird die Eingriffsgröße DKEG ermittelt, indem ein Vorwert DKEGroh für die Eingriffsgröße in Abhängigkeit der Gewichtungsgröße aqresz gewichtet wird. Dabei kann die Gewichtung zum einen direkt durch den Gewichtungsfaktor aqresz erfolgen. Zum anderen ist auch die Gewichtung durch eine Funktionalität f(aqresz) denkbar. Anstelle der Gewichtung der Eingriffsgröße ist auch eine Gewichtung der Querbeschleunigungsgröße denkbar.

Anschließend an den Schritt 512 wird erneut der Schritt 503 ausgeführt.

Sowohl der Schwellenwert S1 für die Amplitudengröße als auch die Schwellenwerte S2 und S3, die den Wertebereich für die Periodendauergröße definieren, werden als Funktion der Geschwindigkeitsgröße vf vorgegeben.

Die in Figur 5 dargestellten Schritte laufen in den Blöcken 401, 402, 403 und 405 ab.

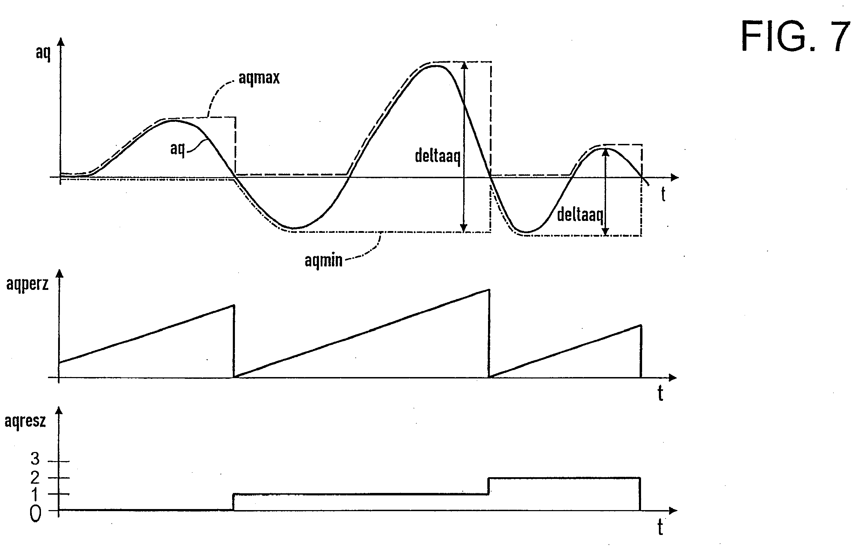

An dieser Stelle sei auf Figur 7 hingewiesen. Figur 7 zeigt einen Verlauf für die Querbeschleunigungsgröße aq, der eine Schwingung aufweist. Figur 7 ist exemplarisch die Bedeutung der Größen aqmax, aqmin, deltaag, aqperz und aqresz zu entnehmen.

Wie bereits erwähnt, kann eine Korrektur der Eingriffsgröße durchgeführt werden. Hierbei ist denkbar, beispielsweise eine Korrektur in Abhängigkeit einer Höhengröße, die die geographische Höhe des Fahrzeuges beschreibt, durchzuführen und/oder eine Korrektur in Abhängigkeit einer Steigungsggröße, die die Fahrbahnneigung in Fahrzeuglängsrichtung beschreibt durchzuführen, und/oder eine Korrektur in Abhängigkeit von Größen, in deren Abhängigkeit die Eingriffsgröße dahingehend korrigiert wird, daß in allen Motorbetriebspunkten ein äquivalentes Motormoment eingestellt wird, durchzuführen.

Wie bereits erwähnt beschreibt die Eingriffsgröße, je nachdem, mit welcher Art von Motor das Fahrzeug ausgestattet ist, den einzustellenden Drosselklappenwinkel oder die Kraftstoffeinspritzmenge oder den einzustellenden Zündzeitpunkt oder den durch den Motor fließenden Strom.

Die Beeinflussung des Vortriebs in Abhängigkeit der Eingriffsgröße kann zu einer Begrenzung, einer Reduzierung oder einer Erhöhung des Antriebsmomentes führen.

Ergänzend zu den Motoreingriffen können zur Beeinflussung des Vortriebes des Fahrzeuges auch Eingriffe in die Radbremsen und/oder in die Kupplung und/oder in das Getriebe durchgeführt werden. D.h. für sämtliche dieser Eingriffsgrößen sind die in den Figuren dargestellten Vorrichtungen bzw. Verfahren in entsprechender Weise anwendbar.

Unter Umständen ist es auch von Vorteil, die Reifenquerkräfte zu erfassen, und bei der Ermittlung der Eingriffsgröße zu berücksichitgen.

Als Größe, die das zeitliche Verhalten der Querbeschleunigungsgröße beschreibt, kann auch eine Größe, die die Frequenz der Querbeschleunigungsgröße beschreibt, verwendet werden.

In den vorstehenden Ausführungen war von Fahrzeugzuständen bzw. Fahrsituationen die Rede, bei denen sich das Fahrzeug instabil verhält, und die erkannt werden sollen. Nachfolgend werden einige aufgeführt: Slalomfahrt, Wedelfahrt, Kreisfahrt bzw. Kurvenfahrt mit entsprechender Fahrzeuggeschwindigkeit, Ausweichmanöver, Spurwechselmanöver, VDA-Ausweichgasse sowie Schleudern. Diese Fahrzeugzustände bzw. Fahrsituationen können beispielsweise auch mit Hilfe des Lenkwinkels, des Gierwinkels, des Geschwindigkeitsverlaufs bzw. anhand von Geschwindigketsunterschieden erfaßt werden.

Abschließend sei bemerkt, daß die in der Beschreibung gewählte Form des Ausführungsbeispiels sowie die in den Figuren gewählte Darstellung keine einschränkende Wirkung aus die erfindungswesentliche Idee darstellen soll.

## Patentansprüche

1. Vorrichtung zur Beeinflussung des Vortriebes eines Fahrzeuges, wobei die Vorrichtung
- erste Mittel (101) enthält, mit denen eine Querbeschleunigungsgröße (aq) erfaßt wird, die die auf das Fahrzeug wirkende Querbeschleunigung beschreibt,
- zweite Mittel (402) enthält, mit denen eine Größe (aqperz) ermittelt wird, die das zeitliche Verhalten der Querbeschleunigungsgröße beschreibt, wobei als Größe, die das zeitliche Verhalten der Querbeschleunigungsgröße beschreibt, eine Periodendauergröße (aqperz) ermittelt wird, die den zeitlichen Abstand zweier Nulldurchgänge der Querbeschleunigungsgröße mit gleichem Vorzeichenwechsel, insbesondere einem Vorzeichenwechsel von positiven zu negativen Werten der Querbeschleunigungsgröße hin, beschreibt,
- dritte Mittel (401, 403, 405) enthält, mit denen wenigstens in Abhängigkeit der Querbeschleunigungsgröße und der Größe, die das zeitliche Verhalten der Querbeschleunigungsgröße beschreibt, eine Eingriffsgröße (DKEG) ermittelt wird,
- vierte Mittel (106) enthält, mit denen zur Beeinflussung des Vortriebes zumindest Motoreingriffe durchgeführt werden, wobei die Motoreingriffe in Abhängigkeit der Eingriffsgröße (DKEG) vorgenommen werden.

2. Vorrichtung nach Anspruch 1, **dadurch gekennzeichnet, dass** die dritten Mittel erste Mittel (401) aufweisen, mit denen eine Amplitudengröße (deltaaq) ermittelt wird, die den Abstand zwischen einem Minimalwert und einem Maximalwert der Querbeschleunigungsgröße (aq) innerhalb einer Periode der Querbeschleunigungsgröße beschreibt, wobei die Eingriffsgröße (DKEG) in Abhängigkeit dieser Amplitudengröße ermittelt wird, und/oder dass die dritten Mittel zweite Mittel (403) aufweisen, mit denen in Abhängigkeit der Größe, die das zeitliche Verhalten der Querbeschleunigungsgröße beschreibt und/oder der Amplitudengröße (deltaq) eine Gewichtungsgröße (aqresz) für die Eingriffsgröße ermittelt wird, und/oder
dass die dritten Mittel dritte Mittel (405) aufweisen, mit denen in Abhängigkeit der Gewichtungsgröße (aqresz) und einem wenigstens vom Fahrerwunsch abhängigen Vorwert für die Eingriffsgröße (DKEGroh) die Eingriffsgröße (DKEG) ermittelt wird.

3. Vorrichtung nach Anspruch 2, **dadurch gekennzeichnet,**
**dass** es sich bei der Gewichtungsgröße (aqresz) um eine Zählergröße handelt, die, insbesondere um 1, inkrementiert wird, wenn die Amplitudengröße (deltaaq) größer als ein Schwellenwert (S1) ist und wenn die Periodendauergröße (aqpesz) innerhalb eines vorgebbaren Wertebereiches (S2, S3) liegt, insbesondere ist die Zählergröße auf einen Maximalwert beschränkt, und/oder dass die Zählergröße auf einen vorgegebenen Wert, insbesondere Null, zurückgesetzt wird, wenn die Amplitudengröße (deltaaq) kleiner als der Schwellenwert ist oder wenn die Zählergröße außerhalb des vorgebbaren Wertebereiches liegt.

4. Vorrichtung nach Anspruch 3, **dadurch gekennzeichnet,**
**dass** der Schwellenwert für die Amplitudengröße (deltaaq) und/oder der Wertebereich für die Periodendauergröße (aqpesz) als Funktion einer Geschwindigkeitsgröße (vf), die die Fahrzeuggeschwindigkeit beschreibt, vorgebbar ist.

5. Vorrichtung nach Anspruch 1, **dadurch gekennzeichnet,**
**dass** der Nulldurchgang der Querbeschleunigungsgröße (aq) in Abhängigkeit der zeitlichen Änderung der Querbeschleunigungsgröße ermittelt wird.

6. Vorrichtung nach Anspruch 1, **dadurch gekennzeichnet,**
**dass** die Eingriffsgröße (DKEG) so ermittelt wird, dass durch den Motoreingriff eine Stabilisierung des Fahrzeuges in Querrichtung erfolgt, insbesondere soll mit dem Motoreingriff ein Umkippen des Fahrzeuges um eine in Längsrichtung des Fahrzeuges orientierte Fahrzeugachse, vermieden werden.

7. Vorrichtung nach Anspruch 1, **dadurch gekennzeichnet,**
**dass** die Eingriffsgröße (DKEG) den einzustellenden Drosselklappenwinkel oder die Kraftstoffeinspritzmenge oder den einzustellenden Zündzeitpunkt beschreibt.

8. Vorrichtung nach Anspruch 1, **dadurch gekennzeichnet,**
**dass** ergänzend zu den Motoreingriffen zur Beeinflussung des Vortriebes des Fahrzeuges auch Eingriffe in die Radbremsen und/oder in die Kupplung und/oder in das Getriebe durchgeführt werden.

## Claims

1. Apparatus for influencing the propulsion of a vehicle, wherein the apparatus
- contains first means (101) which are used to capture a lateral acceleration variable (aq) which describes the lateral acceleration acting on the vehicle,
- contains second means (402) which are used to determine a variable (aqperz) describing the temporal behaviour of the lateral acceleration variable, wherein a period duration variable (aqperz) is determined as the variable describing the temporal behaviour of the lateral acceleration variable and describes the temporal spacing between two zero crossings of the lateral acceleration variable with an identical sign change, in particular a sign change from positive to negative values of the lateral acceleration variable,
- contains third means (401, 403, 405) which are used to determine an intervention variable (DKEG) at least on the basis of the lateral acceleration variable and the variable describing the temporal behaviour of the lateral acceleration variable,
- contains fourth means (106) which are used to carry out at least engine interventions for the purpose of influencing the propulsion, wherein the engine interventions are carried out on the basis of the intervention variable (DKEG).

2. Apparatus according to Claim 1, **characterized**
**in that** the third means have first means (401) which are used to determine an amplitude variable (deltaaq) which describes the spacing between a minimum value and a maximum value of the lateral acceleration variable (aq) within a period of the lateral acceleration variable, wherein the intervention variable (DKEG) is determined on the basis of this amplitude variable, and/or
**in that** the third means have second means (403) which are used to determine a weighting variable (aqresz) for the intervention variable on the basis of the variable describing the temporal behaviour of the lateral acceleration variable and/or the amplitude variable (deltaaq), and/or
**in that** the third means have third means (405) which are used to determine the intervention variable (DKEG) on the basis of the weighting variable (aqresz) and a previous value for the intervention variable (DKEGroh) dependent at least on the driver's request.

3. Apparatus according to Claim 2, **characterized**
**in that** the weighting variable (aqresz) is a counter variable which is incremented, in particular by 1, if the amplitude variable (deltaaq) is greater than a threshold value (S1) and if the period duration variable (aqperz) is within a predefinable range of values (S2, S3), in particular the counter variable is restricted to a maximum value, and/or
**in that** the counter variable is reset to a predefined value, in particular zero, if the amplitude variable (deltaaq) is less than the threshold value or if the counter variable is outside the predefinable range of values.

4. Apparatus according to Claim 3, **characterized**
**in that** the threshold value for the amplitude variable (deltaaq) and/or the range of values for the period duration variable (aqperz) can be predefined as a function of a speed variable (vf) which describes the vehicle speed.

5. Apparatus according to Claim 1, **characterized**
**in that** the zero crossing of the lateral acceleration variable (aq) is determined on the basis of the temporal change in the lateral acceleration variable.

6. Apparatus according to Claim 1, **characterized in that** the intervention variable (DKEG) is determined in such a manner that the vehicle is stabilized in the transverse direction by means of the engine intervention, in particular the engine intervention is intended to avoid the vehicle rolling over about a vehicle axis oriented in the longitudinal direction of the vehicle.

7. Apparatus according to Claim 1, **characterized**
**in that** the intervention variable (DKEG) describes the throttle valve angle to be set or the fuel injection quantity or the ignition time to be set.

8. Apparatus according to Claim 1, **characterized**
**in that**, in addition to the engine interventions for influencing the propulsion of the vehicle, interventions in the wheel brakes and/or in the clutch and/or in the transmission are also carried out.

## Revendications

1. Dispositif pour influencer la propulsion d'un véhicule, le dispositif
- contenant des premiers moyens (101) avec lesquels est acquise une grandeur d'accélération transversale (aq), laquelle décrit l'accélération transversale qui agit sur le véhicule,
- contenant des deuxièmes moyens (402) avec lesquels est déterminée une grandeur (aqperz) qui décrit le comportement dans le temps de la grandeur d'accélération transversale, la grandeur qui décrit le comportement dans le temps de la grandeur d'accélération transversale déterminée étant une grandeur de durée de période (aqperz) qui décrit l'écart dans le temps entre deux passages par zéro de la grandeur d'accélération transversale avec un même changement de signe, notamment un changement de signe de valeurs positives vers des valeurs négatives de la grandeur d'accélération transversale,
- contenant des troisièmes moyens (401, 403, 405) avec lesquels une grandeur d'intervention (DKEG) est déterminée au moins en fonction de la grandeur d'accélération transversale et de la grandeur qui décrit le comportement dans le temps de la grandeur d'accélération transversale,
- contenant des quatrièmes moyens (106) avec lesquels sont effectuées au moins des interventions dans le moteur en vue d'influencer la propulsion, les interventions dans le moteur étant effectuées en fonction de la grandeur d'intervention (DKEG).

2. Dispositif selon la revendication 1, **caractérisé en ce**
**que** les troisièmes moyens possèdent des premiers moyens (401) avec lesquels est déterminée une grandeur d'amplitude (deltaag), laquelle décrit l'écart entre une valeur minimale et une valeur maximale de la grandeur d'accélération transversale (aq) à l'intérieur d'une période de la grandeur d'accélération transversale, la grandeur d'intervention (DKEG) étant déterminée en fonction de cette grandeur d'amplitude, et/ou
en ce que les troisièmes moyens possèdent des deuxièmes moyens (403) avec lesquels est déterminée une grandeur de pondération (aqresz) pour la grandeur d'intervention en fonction de la grandeur qui décrit le comportement dans le temps de la grandeur d'accélération transversale et/ou de la grandeur d'amplitude (deltaag), et/ou
en ce que les troisièmes moyens possèdent des troisièmes moyens (405) avec lesquels est déterminée la grandeur d'intervention (DKEG) en fonction de la grandeur de pondération (aqresz) et d'une valeur préliminaire pour la grandeur d'intervention (DKEGroh), laquelle est dépendante du souhait du conducteur.

3. Dispositif selon la revendication 2, **caractérisé en ce que** la grandeur de pondération (aqresz) est une grandeur de compteur qui est incrémentée, notamment de 1, lorsque la grandeur d'amplitude (deltaag) est supérieure à une valeur de seuil (S1) et lorsque la grandeur de durée de période (aqperz) se trouve à l'intérieur d'une plage de valeurs (S2, S3) pouvant être prédéfinie, la grandeur de compteur étant notamment limitée à une valeur maximale, et/ou **en ce que** la grandeur de compteur est ramenée à une valeur prédéfinie, notamment nulle, lorsque la grandeur d'amplitude (deltaag) est inférieure à la valeur de seuil ou lorsque la grandeur de compteur se trouve en-dehors de la plage de valeurs pouvant être prédéfinie.

4. Dispositif selon la revendication 3, **caractérisé en ce que** la valeur de seuil pour la grandeur d'amplitude (deltaag) et/ou la plage de valeurs pour la grandeur de durée de période (aqperz) peuvent être prédéfinies en tant que fonction d'une grandeur de vitesse (vf) qui décrit la vitesse du véhicule.

5. Dispositif selon la revendication 1, **caractérisé en ce que** le passage par zéro de la grandeur d'accélération transversale (aq) est déterminé en fonction de la variation dans le temps de la grandeur d'accélération transversale (aq).

6. Dispositif selon la revendication 1, **caractérisé en ce que** la grandeur d'intervention (DKEG) est déterminée de telle sorte qu'une stabilisation du véhicule dans la direction transversale est effectuée par le biais de l'intervention dans le moteur, l'intervention dans le moteur devant notamment empêcher un retournement du véhicule autour d'un axe de véhicule orienté dans la direction longitudinale du véhicule.

7. Dispositif selon la revendication 1, **caractérisé en ce que** la grandeur d'intervention (DKEG) décrit l'angle de papillon des gaz à régler ou la quantité d'injection de carburant ou le moment d'allumage à régler.

8. Dispositif selon la revendication 1, **caractérisé en ce qu'**en complément des interventions dans le moteur, des interventions dans les freins de roue et/ou dans l'embrayage et/ou dans la boîte de vitesses ont également lieu en vue d'influencer la propulsion du véhicule.
